# EUROPÄISCHE PATENTSCHRIFT

(11) **EP 0 614 495 B1**
(45) Veröffentlichungstag und Bekanntmachung des Hinweises auf die Patenterteilung: **28.07.1999**
(21) Anmeldenummer: 93918882.7
(22) Anmeldetag: 16.08.1993
(51) Int. Cl.: C22C 38/58, B60J 5/04

(54) **VERWENDUNG EINER STAHLLEGIERUNG FÜR ROHRE ZUR VERSTÄRKUNG DER SEITENTÜREN VON PERSONENKRAFTWAGEN**
USE OF A STEEL ALLOY FOR REINFORCEMENT TUBES OF SIDE DOORS OF PRIVATE CARS
UTILISATION D'UN ALLIAGE D'ACIER POUR PRODUIRE DES TUBES DE RENFORCEMENT DES PORTES LATERALES DE VOITURES PARTICULIERES

(30) Priorität: 17.08.1992 DE 4227154
(43) Veröffentlichungstag der Anmeldung: 14.09.1994
(73) Patentinhaber: BENTELER AG, D-33104 Paderborn (DE)
(72) Erfinder: OLSZEWSKI, Egon, D-33106 Paderborn (DE); TÖPKER, Dieter, D-33100 Neuenbeken (DE); KELLERSOHN, Georg, D-33014 Bad Driburg (DE)
(74) Vertreter: Bockermann, Rolf, Dipl.-Ing.
(86) Internationale Anmeldenummer: DE9300733
(87) Internationale Veröffentlichungsnummer: WO9404713

(56) Entgegenhaltungen:
- EP-A- 0 425 058
- DE-C- 3 728 476
- US-A- 4 796 946

## Beschreibung

Die Erfindung betrifft die Verwendung einer Stahllegierung für Rohre zur Verstärkung der Seitentüren von Personenkraftwagen.

In der DE-PS 27 50 867 ist eine Stahllegierung für Rohre zur Verstärkung der Seitentüren von Personenkraftwagen offenbart, bei welcher die Rohre nach dem üblichen Verfahren hergestellt und bei 900°C bis 930°C geglüht sowie in Luft abgekühlt werden. Diese Stahllegierung gestattet die Herstellung von Rohren mit relativ großen Querschnitten im Hinblick auf die Erreichung folgender Prüfbedingungen:
Zugfestigkeit Rₘ ≥ 1100 N/mm²
Streckgrenze Rₜ ≥ 800 N/mm²
Bruchdehnung A₅ ≥ 8 %
Verformungsarbeit W₁₅₀ ≥ 1900 Joule

Aufgrund des Sachverhalts, daß sich die Dicke der Seitentüren von Personenkraftwagen durch entsprechende Entwicklungen der Automobilindustrie in den letzten Jahren erheblich verringert hat, besteht die Forderung, im Durchmesser kleinere Rohre zur Verstärkung der Seitentüren zur Verfügung zu stellen. Dies ist im bekannten Fall jedoch nur dann möglich, wenn vergleichsweise komplizierte Rohrquerschnitte zur Anwendung gelangen.

Um auch unter diesen Bedingungen Rohre mit kreisrunden Querschnitten einsetzen zu können, ist im Umfang der DE-PS 37 28 476 vorgeschlagen worden, insbesondere den Legierungsbestandteil Nickel und darüberhinaus auch den Legierungsbestandteil Aluminium zu erhöhen. Nachteilig an diesem Vorschlag ist jedoch der Sachverhalt, daß durch die Legierungselemente Nickel und Chrom der Stahl sehr teuer ist. Folglich werden die Gestehungskosten einer aus Rohren gebildeten Verstärkung für die Seitentüren von Personenkraftwagen merklich heraufgesetzt.

Desweiteren ist der Vorschlag der DE-PS 39 35 965 bekannt, bei welchem ein extrem hoher Mangananteil eingesetzt wird. Bei diesem Vorschlag beschränkt sich jedoch die Verwendung der angegebenen Stahllegierung auf ein warmgewalztes Rundrohr als Ausgangsprodukt.

Ausgehend von dem vorstehend erläuterten Stand der Technik liegt der Erfindung die Aufgabe zugrunde, eine wirtschaftliche Stahllegierung für Rohre zur Verstärkung der Seitentüren von Personenkraftwagen zu schaffen, die aufgrund ihrer Zusammensetzung auch bei Temperaturen unter 10°C eine ausreichend hohe Festigkeit bei gleichzeitig befriedigendem Streckgrenzenverhältnis besitzt.

Die Lösung dieser Aufgabe besteht in den Merkmalen des Patentanspruchs 1.

Der wesentliche Vorteil der erfindungsgemäßen Stahllegierung wird darin gesehen, daß ihre technologischen Eigenschaften es erlauben, sowohl warmgewalzte Rohre unter Luftabkühlung zu härten als auch dünnwandige Hohlprofile in geschlossener Form sowie als offene Profile mit nachgeschalteter Härtung mittels Wasservergütung zu Türaufprallträgersystemen verarbeiten zu können, obwohl die teuren Legierungselemente Chrom und Nickel reduziert und durch Mangan in dem erforderlichen Umfang substituiert worden sind. Auf diese Weise lassen ich sehr dünnwandige Rohre realisieren, welche auch in relativ schmalen Seitentüren von Kraftfahrzeugen mit großem Erfolg als Aufprallträger eingesetzt werden können.

Ein weiterer Vorteil der erfindungsgemäßen Stahllegierung ist ihr im Vergleich zu den bekannten Stahllegierungen besseres Verformungsverhalten bei niedrigeren Temperaturen als -10°C. Auch hierbei behalten Rohre aus dieser Stahllegierung die energieverzehrende Wirksamkeit für einen Seitencrash bei.

Beim Glühen der erfindungsgemäßen Stahllegierung ist darüberhinaus festzustellen, daß dann die Zugfestigkeit außergewöhnlich stark zunimmt. Auf diese Weise können Warmverformungen, die z.B. aus Freigangsgründen notwendig sind, partiell vorgenommen werden, ohne daß ein Festigkeitsverlust auftritt. In diesem Zusammenhang ist zu betonen, daß für die Verformungsenergie die Festigkeit wesentlich wichtiger als die Streckgrenze ist.

Zussammenfassend ist mithin festzustellen, daß es die Erfindung ermöglicht, die bei Rohren notwendigen mechanisch-technologischen Eigenschaften für die Realisierung von Türaufprallträgersystemen fertigungstechnisch sowohl als Warmrohr vom Kühlbett mittels Lufthärtung als auch als dünnwandiges geschweißtes Rohr/Hohlkörper/Profil (Wanddicke s ≤ 2 mm) mit und ohne nachgeschalteter Wasservergütung zu erzielen. Es wird ein hohes Umformvermögen erreicht, das sich durch das ausgeprägte Verhältnis von Streckgrenze und Zugfestigkeit auszeichnet (Rp/Rm ≈ 0,6-0,8).

Die Ausführungsform einer Stahllegierung gemäß Patentanspruch 2 ist hauptsächlich für den Einsatz von warmgewalzten Rohren vorgesehen. Hierbei werden die notwendigen technologischen Eigenschaften für die Gestaltung als Rohr für einen Türaufprallträger allein durch die Lufthärtung erreicht. Es liegt hierbei nahezu ein Zwischenstufengefüge vor mit einem kleinen Anteil Martensit (etwa 20 %), der der Stahllegierung bei hohen Streckgrenzen- und Festigkeitswerten dennoch die Fähigkeit verleiht, ein Maximum an Umformarbeit aufnehmen zu können, wobei es sich im speziellen Fall um Biegearbeit handelt.

Die im Patentanspruch 3 angegebene Ausführungsform ist im wesentlichen für den Einsatz von dünnwandigen Profilen bestimmt. Hierbei werden die notwendigen technologischen Eigenschaften für den Einsatz als Türaufprallträger entweder nach dem Verschweißen zum geschlossenen Hohlprofil oder nach dem Verformen zum offenen Profil durch eine entsprechend abgestimmte Wasservergütung erreicht. Je nach Abkühlungsgeschwindigkeit beim Wasservergüten bildet sich ein Zwischenstufengefüge, wobei der Anteil des Martensits in Abhängigkeit vom Wasserabschrecken bestimmt wird. Dabei wirkt das Legierungselement Bor im Zusammenspiel mit Aluminium, Titan und Stickstoff als ein zusätzlicher Härteeffekt, ohne daß dadurch die Zähigkeitseigenschaften beeinträchtigt werden.

## Patentansprüche

1. Verwendung einer Stahllegierung für Rohre zur Verstärkung der Seitentüren von Personenkraftwagen, welche in Gewichtsprozenten ausgedrückt
| | | |
|---|---|---|
| 0,15 | - 0,25 | Kohlenstoff (C), |
| 0,50 | - 0,65 | Silizium (Si), |
| 2,00 | - 3,00 | Mangan (Mn), |
| 0,50 | - 0,70 | Chrom (Cr), |
| 0,30 | - 0,50 | Molybdän (Mo), |
| 0,20 | - 0,60 | Nickel (Ni), |
| 0,03 | - 0,05 | Aluminium (Al), |
| 0,02 | - 0,04 | Niob (Nb), |
| 0,01 | - 0,06 | Titan (Ti), |
| 0,001 - | 0,004 | Bor (B), |
| 0,01 | - 0,04 | Stickstoff (N), |
| bis zu | 0,02 | Phosphor (P), |
| bis zu | 0,015 | Schwefel (S) und |
| bis zu | 0,50 | Kupfer (Cu) aufweist, |
Rest Eisen und allfällige Verunreinigungen,
wobei in Gewichtsprozenten die Summe von C, Si, Mn, Cr und Mo sich zwischen 3,5 und 4,5 bewegt und die Summe von Ti und Nb in Gewichtsprozenten bis zu 0,07 beträgt.

2. Verwendung einer Stahllegierung nach Patentanspruch 1, welche in Gewichtsprozenten ausgedrückt 0,23 C, 0,65 Si, 2,2 Mn, 0,6 Cr, 0,4 Mo, 0,45 Ni, 0,03-0,05 Al, 0,02-0,04 Nb, 0,03 Ti, 0,002 B, 0,015 N, bis zu 0,02 P und bis zu 0,015 S aufweist.

3. Verwendung einer Stahllegierung nach Patentanspruch 1, welche in Gewichtsprozenten ausgedrückt 0,2 C, 0,65 Si, 2,8 Mn, 0,6 Cr, 0,4 Mo, 0,45 Ni, 0,03-0,05 Al, 0,02-0,04 Nb, 0,03 Ti, 0,002 B, 0,015 N, bis zu 0,02 P und bis zu 0,015 S aufweist.

## Claims

1. Use of a steel alloy for tubes for reinforcing the side doors of motor vehicles containing, expressed in percent by weight:
| | | |
|---|---|---|
| 0.15 - | 0.25 | carbon (C), |
| 0.50 - | 0.65 | silicon (Si), |
| 2.00 - | 3.00 | manganese (Mn), |
| 0.50 - | 0.70 | chromium (Cr), |
| 0.30 - | 0.50 | molybdenum (Mo), |
| 0.20 - | 0.60 | nickel (Ni), |
| 0.03 - | 0.05 | aluminium (Al), |
| 0.02 - | 0.04 | niobium (Nb), |
| 0.01 - | 0.06 | titanium (Ti), |
| 0.001 - | 0.004 | boron (B), |
| 0.01 - | 0.04 | nitrogen (N), |
| Up to | 0.02 | phosphorus (P), |
| Up to | 0.015 | sulphur (S) and |
| Up to | 0.50 | copper (C) |
remainder iron and any impurities,
wherein the sum of C, Si, Mn, Cr and Mo expressed in percent by weight varies between 3.5 and 4.5 and the sum of Ti and Nb expressed in percent by weight is up to 0.07.

2. Use of a steel alloy according to claim 1, containing, expressed in percent by weight: 0.23 C, 0.65 Si, 2.2 Mn, 0.6 Cr, 0.4 Mo, 0.45 Ni, 0.03-0.05 Al, 0.02-0.04 Nb, 0.03 Ti, 0.002 B, 0.015 N, up to 0.02 P and up to 0.015 S.

3. Use of a steel alloy according to claim 1, containing, expressed in percent by weight: 0.2 C, 0.65 Si, 2.8 Mn, 0.6 Cr, 0.4 Mo, 0.45 Ni, 0.03-0.05 Al, 0.02-0.04 Nb, 0.03 Ti, 0.002 B, 0.015 N, up to 0.02 P and up to 0.015 S.

## Revendications

1. Utilisation d'un alliage d'acier pour tube destiné à renforcer les portières latérales de véhicules privés, alliage qui comprend, exprimé en pourcentage en poids :
| | |
|---|---|
| 0,15 - | 0,25 carbone C |
| 0,50 - | 0,65 silicium (Si) |
| 2,00 - | 3,00 manganèse (Mn) |
| 0,50 - | 0,70 chrome (Cr) |
| 0,30 - | 0,50 molybdène (Mo) |
| 0,20 - | 0,60 nickel (Ni) |
| 0,03 - | 0,05 aluminium (Al) |
| 0,02 - | 0,04 niobium (Nb) |
| 0,01 - | 0,06 titane (Ti) |
| 0,001 - | 0,004 bore (B) |
| 0,01 - | 0,04 azote (N) |
| jusqu'à | 0,02 phosphore (P) |
| jusqu'à | 0,015 soufre (S) et |
| jusqu'à | 0,50 cuivre (Cu) |
le reste étant constitué de fer et d'impuretés éventuelles,
dans les pourcentages en poids, la somme C, Si, Mn, Cr et Mo se déplaçant entre 3,5 et 4,5 et la somme de Ti et Nb en pourcentage en poids atteignant jusqu'à 0,07.

2. Utilisation d'un alliage d'acier selon la revendication 1, alliage qui comprend, exprimé en pourcentage en poids 0,23 C, 065 Si, 2,2 Mn, 0,6 Cr, 0,4 Mo, 0,45 Ni, 0,03-0,05 Al, 0,02-0,04 Nb, 0,03 Ti, 0,002 B, 0,015 N et jusqu'à 0,02 P et jusqu'à 0,015 S.

3. Utilisation d'un alliage d'acier selon la revendication 1, alliage qui comprend, exprimé en pourcentage en poids 0,2 C, 0,65 Si, 2,8 Mn, 0,6 Cr, 0,4 Mo, 0,45 NI, 0,03-0,05 Al, 0,02-0,04 Nb, 0,03 Ti, 0,002 B, 0,015 N, jusqu'à 0,02 P et jusqu'à 0,015 S.
